# EUROPEAN PATENT SPECIFICATION

(11) **EP 1 911 308 B1**
(45) Date of publication and mention of the grant of the patent: **23.09.2009**
(21) Application number: 06737314.2
(22) Date of filing: 07.03.2006
(51) Int. Cl.: G01C 3/08

(54) **WIRELESS COMMUNICATION DEVICE WITH RANGE FINDING FUNCTIONS**
DRAHTLOSES KOMMUNIKATIONSGERÄT MIT REICHWEITEFINDEFUNKTIONEN
DISPOSITIF DE COMMUNICATION SANS FIL PRESENTANT DES FONCTIONS DE TELEMETRIE

(30) Priority: 04.08.2005 US 196940
(43) Date of publication of application: 16.04.2008
(73) Proprietor: Sony Ericsson Mobile Communications AB, 221 88 Lund (SE)
(72) Inventor: SNYDER, Thomas, David, Cary, North Carolina 27511 (US)
(74) Representative: HOFFMANN EITLE
(86) International application number: PCT/US2006/008130
(87) International publication number: WO 2007/018604

(56) References cited:
- EP-A- 1 324 597
- WO-A-93/12604
- WO-A-20/04036246
- DE-A1- 10 226 329
- US-A1- 2004 109 012

## Description

### BACKGROUND

The present invention generally relates to wireless communication devices, such as cellular radiotelephones, and particularly relates to incorporating range-finding functions into such devices.

Wireless communication devices historically provided only basic communication functions. Sometimes even the basic functions were quite limited. Limited battery performance and the lack of inexpensive user interface elements (graphical displays, decent audio components, etc.), represent some of the reasons underlying the paucity of extra features in older wireless communication devices. Further, before modern advances in device miniaturization, it simply was not practical to add more than the baseline set of communication features to devices that already were larger than desired.

Network capabilities also played into the mix of feature inclusion considerations. Early wireless communication networks offered traditional circuit-switched voice and fax services, and little else. In that sense, then, it may have made little sense to imbue wireless communication devices with additional features related to non-voice data, because there was no convenient way to transfer such data from them.

All or most of the above restrictions are fading as a consequence of improving battery technologies, relentless device miniaturization, and evolving data networks. These kinds of advances expand the convenience and reach of wireless communication devices further into our everyday lives. For example, modern cellular radiotelephones function as traditional voice communication devices, but also offer a diverse range of additional features. Such features include portable digital assistant features (so called "smart phones"), music management features, including retrieval, storage, and playback, as well as robust data service features, including web browsing, emailing, and text messaging.

Improved user interfaces, increased battery capacities, and the improved access to a diverse range of data networks, all contribute to the expanding role and flexibility of wireless communication devices. With this increased flexibility comes new opportunities to incorporate additional, non-traditional functions into wireless communication devices, In particular, significant synergies may be realized through the incorporation of non-traditional functions that, for example, capitalize on the robust user interfaces of contemporary wireless communication devices, or that complement the data transmission capabilities of such devices.

DE 102 26 329 A1 discloses a wireless communication device including functionality for measuring distances, angles or speeds, said device comprising a range finder configured to generate distance measurement signals by emitting ranging signals and detecting corresponding reflection signals, and one or more processing circuits configured to process the distance measurement signals and output corresponding distance measurement information via the wireless communication device.

Furthermore, US 200410109012 A1 discloses a mobile device having a data capturing functionality, said device comprising a wireless communication circuit for communicating with a data assembly station, a camera for capturing digital image data, a range finder aligned with the camera for obtaining distance measurement information related to digital image data captured by the camera, and one or more processing circuits configured to transmit related digital image data and distance measurement information to the data assembly station via the wireless communication circuit. Plural of such mobile devices capture data and send the data to a data assembly process at the data assembly station.

EP 1 324 597 A describes a wireless device with a camera and a proximity sensor for determining, based on IR or ultrasound measurements, the distance between a user of the device and the device itself. Using the information from the proximity sensor, images captured by the camera (eg. for video telephony) are adjusted to maintain the captured object (eg. the user's face) at a constant size on the display.

### SUMMARY OF THE INVENTION

The invention relates to a wireless communication device according to the features of Claim 1.

By way of non-limiting example, the wireless communication device may comprise a cellular radiotelephone, a pager, a laptop or palmtop computer, or other type of mobile communication.

In at least one embodiment, as part of its processing operations, the wireless communication device is configured to output audible signals as a function of the distance measurement information from the range finder. For example, the wireless communication device may output tones or pulses that are modulated as a function of the distance measurements. Similarly, the wireless communication device may be configured to output a vibratory signal, where the amplitude and/or frequency of vibration are determined as a function of the distance measurement information. In either case, the output may be used to provide object proximity information to a vision-impaired person, for example.

In these, and in other embodiments, the wireless communication device may be configured to output distance measurement information to a display screen of the wireless communication device as part of its processing. In this manner, the wireless communication device provides its user with displayed distance readings that may be, for example, controlled or accessed through a software menu of the device. Alternatively or additionally, the wireless communication device may be configured to transmit distance information obtained from the range finder via a communication circuit included in the wireless communication device.

Regardless of such details, the wireless communication device advantageously may include a camera, and the range finder may be aligned with the camera. For example, in at least one such embodiment, the camera includes a lens disposed in or on a housing of the wireless communication device, and the range finder includes a distance sensor disposed in or on the housing in alignment with that lens. Further, in at least one embodiment, the camera lens and the distance sensor are co-located in a protective recess of the device's housing. Optionally, manually or electronically opening the protective cover of the recess enables the camera and the range finder.

By aligning the range finder with the camera, the wireless communication device may be configured to process distance measurement information from the range finder in conjunction with processing digital image data from the camera. For example, the wireless communication device may store distance measurement information from the range finder with related digital image data from the camera in a memory of the wireless communication device. Additionally or alternatively, the wireless communication device may be configured to transmit digital image data and associated distance measurement information to a supporting wireless communication network using the device's cellular communication interface.

Of course, the present invention is not limited to the above features and advantages. Those skilled in the art will recognize additional features and advantages upon reading the following detailed description, and upon viewing the accompanying drawings.

### BRIEF DESCRIPTION OF THE DRAWINGS

Fig. 1 is a partial block diagram of a wireless communication device that includes a range finder configured to provide distance measurement information for local objects.
Fig. 2 is a more detailed block diagram for one embodiment of the wireless communication device of Fig. 1.
Fig. 3 is a perspective view of a flip configuration for the wireless communication device of Fig. 1.
Fig. 4 is a side view of the wireless communication device of Fig. 3 in an open position.
Fig. 5 is a perspective view of a non-flip configuration of the wireless communication device of Fig. 1.
Fig. 6 is a logic flow diagram, illustrating one embodiment of distance measurement processing that may be carried out by the wireless communication device of Fig. 1.
Fig. 7 is a perspective view of the wireless communication device of Fig. 1, wherein the range finder is configured as a detachable unit.
Fig. 8 is another perspective view of the mobile terminal configuration shown in Fig. 6.
Fig. 9 is a logic flow diagram, illustrating another embodiment of distance measurement processing that may be carried out by the wireless communication device of Fig. 1.

### DETAILED DESCRIPTION

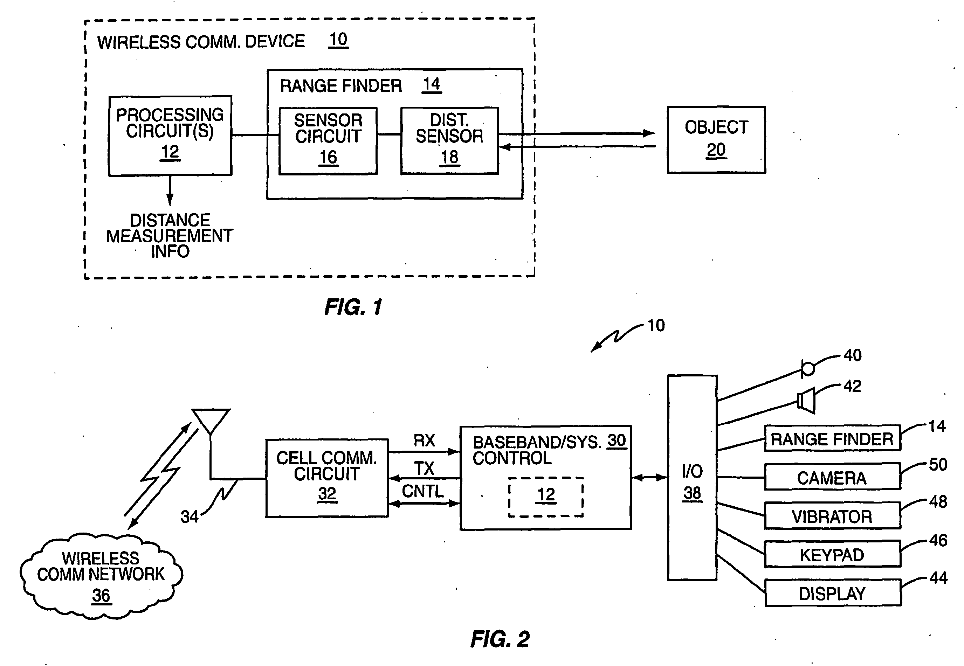

Fig. 1 is a partial block diagram of a wireless communication device 10 that comprises one or more processing circuits 12, and a range finder 14, which may include a sensor circuit 16 and a distance sensor 18. The distance sensor 18 may comprise an infrared or laser-based emitter/sensor pair, or an ultrasonic transducer, or other type of distance-measuring sensor, and the sensor circuit 16 may be configured to provide the appropriate control and bias signals, as needed.

Regardless of its implementation details, the range finder 14 is configured to generate distance measurement signals by emitting ranging signals and detecting corresponding reflection signals returned from a nearby (local) object 20. Complementing this configuration, the one or more processing circuits 12 are configured to process the distance measurement signals and output corresponding distance measurement information via the wireless communication device 10.

As used herein, the term "wireless communication device" should be construed broadly. By way of non-limiting example, the wireless communication device 10 illustrated in Fig. 1 may comprise a mobile radiotelephone, such as a cellular handset or other mobile terminal, a wireless pager, a wireless portable digital assistant (PDA), a laptop or palmtop computer, or other type of portable communication device. Regardless, the incorporation of the range finder 14 into the wireless communication device 10 offers many advantages, some of which are introduced in the context of Fig. 2.

Fig. 2 is a block diagram illustrating additional details for one embodiment of the wireless communication device 10, wherein the wireless communication device 10 comprises baseband/system control circuits 30, a cellular communication circuit 32 and an associated receive/transmit antenna 34, input/output (I/O) interface circuits 38, and various user interface elements including a microphone 40, a speaker 42, a display screen 44, a keypad 46, a vibrator 48, and a camera 50. Of course, it should be understood that one or more of the illustrated user interface elements may be omitted from the wireless communication device 10, as needed or desired.

In operation, the wireless communication device 10 is configured to wirelessly communicate with a supporting wireless communication network 36, and, in some embodiments, it may be configured to transmit distance measurement information to the wireless communication network 36 (or to systems accessible through the network 36). To that end, the processing circuit(s) 12 may be associated with or included in the baseband/system control circuits 30, such that distance measurement information is formatted for transmission via the cellular communication circuit 32.

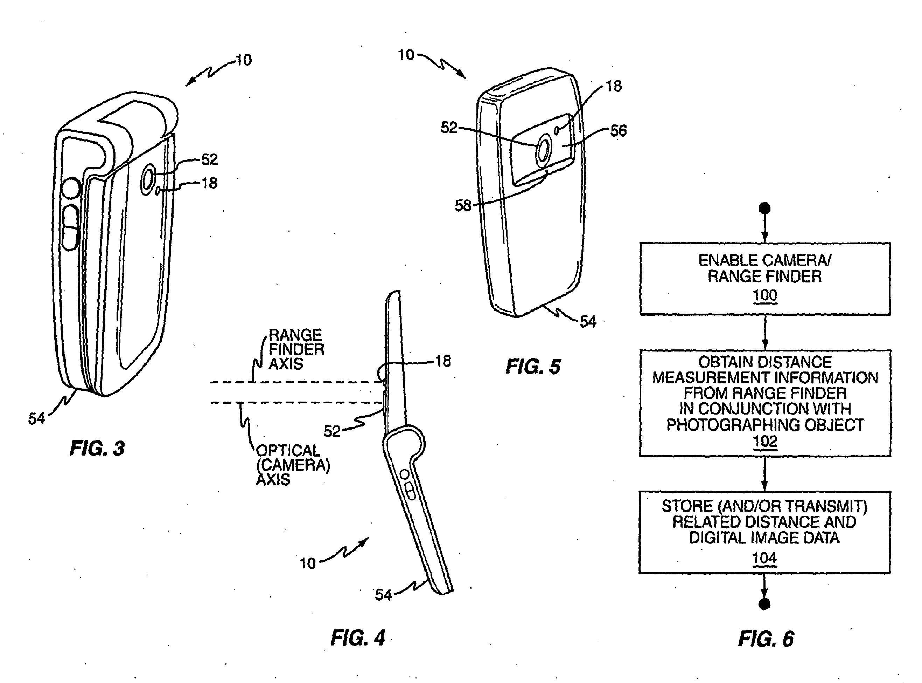

However, independent of whether distance measurement information is transmitted from the wireless communication device 10, incorporation of the range finder 14 offers a number of synergistic functions that complement basic operation of the wireless communication terminal 10. For example, Figs. 3 and 4 illustrate a flip-phone configuration of the wireless communication device 10, wherein a camera lens 52 and the distance sensor 18 are disposed in or on an enclosure 54 of the wireless communication device 10.

In particular, Fig. 4 illustrates an advantageous configuration, wherein the range finder 14 is aligned with the camera 50, such that a user of the camera 50 can obtain distance measurements relative to objects imaged (still or video) by the camera 50. Such alignment may be achieved by aligning the range-finding axis of the distance sensor 18 with the optical axis of the camera lens 52. It should be noted that the wireless communication device 10 can include software that allows its users to conveniently access and control such range finding operations in conjunction with controlling camera functions.

Fig. 5 illustrates an alternative configuration for the wireless communication device 10, wherein the enclosure 54 is configured as a non-flip housing. Of more interest, however, the enclosure 54 includes a protected recess 56 in which the camera lens 52 and the distance sensor 18 are co-located. A moving cover 58 (e.g., a shutter) may protect the recess 56. Advantageously, the wireless communication device 10 can be configured to enable the range finder 14 and/or the camera 50 in response to the cover 58 being opened.

As an example of the synergy gained by including the range finder 14 in camera-enabled embodiments of the wireless communication device 10, Fig. 6 illustrates processing logic wherein range finding functions complement the camera's imaging functions. Processing begins with the wireless communication device enabling the camera 50 and the range finder 14 (Step 100). Processing continues with the wireless communication device 10 obtaining distance measurement information from the range finder 14 in conjunction with imaging an object via the camera 50 (Step 102). The wireless communication device 10 then stores and/or transmits the related distance and digital image data (Step 104).

Thus, the wireless communication device 10 may store distance measurement information obtained from the range finder 14 in conjunction with related digital image data obtained from the camera 50 in a memory of the wireless communication device 10. Such memory may be included in or associated with the one or more processing circuits 12, or the baseband/system control circuits 30.

Additionally, or alternatively, the wireless communication device 10 may transmit related distance measurement information and digital image data to the wireless communication network 36, or to a system accessible through the wireless communication network 36. For example, the wireless communication device 10 may include a software application that is configured to obtain digital image data and related distance measurement information and send the collected data to information control circuits 30. The bundling of distance information and related digital image data can facilitate a number of applications that may run on, or be supported by, the wireless communication device 10, such as accident investigation, surveying, site and building inspections, etc.

In at least some embodiments, the camera 50 provides the wireless communication device 10 with video recording capability, and this capability is enhanced with the device's range-finding ability. For example, the wireless communication device 10 may provide "live" video images on its display screen 42, based on digital image data provided by the camera 50. In this context, the wireless communication device 10 may overlay distance information onto the video images. That is, the wireless communication device 10 may display distance information related to distance measurements made by the range finder 14 for one or more objects within the camera's current field of view.

The distance information may be "live" in that it dynamically updates as the user pans the camera 50, or as objects move within the camera's field of view. At least one embodiment of the wireless communication device 10 is configured to provide live distance measurements, and to enhance that capability by tying other device features to its live distance measurements. For example, the wireless communication device may include stopwatch and/or other timing functions that are started and stopped responsive to the live distance measurements.

In more detail, the wireless communication device 10 can be configured to allow the user to program a timer stop distance and to trigger the timer start responsive to movement detection (i.e., a detection in changed object distance). With this configuration, the user can point the camera 50 at a given object (a runner, for example), and the device's timer starts responsive to the object beginning to move away from the wireless communication device 10, and stops responsive to the object reaching the programmed timer stop distance.

Of course, those skilled in the art will immediately recognize the above example as just one of many possibilities, and will further realize that such functionality can be implemented to a satisfactory level even if the camera 50 does not support full motion video. For example, the "live" distance measurements may be provided based on the camera 50 taking successive images at reasonably short intervals.

Thus, it should be understood that the ability to support dynamically changing distance information on the display 42 of the wireless communication device 10 does not require that either the camera 50 or wireless communication device 10 be configured to support video, although video capability may be preferable. In general, objects are "imaged" by the camera 50, whether such imaging entails recording a single still image, recording a succession of such images, or recording video. In all such cases the wireless communication device 10 can be configured to display distance information related to imaged objects and/or to trigger other device functions based on such image information.

Broadly, then, where the range finder 14 is aligned with the camera 50 of the wireless communication device 10, the device's processing circuit(s) 12. may be configured to maintain dynamically updated distance information related to changing object distances within the camera's field of view. More particularly, the wireless communication device 10 may be configured to display the dynamically updated distance information in conjunction with displaying image data from the camera 50 on the display screen 44 and/or to transmit dynamically changing distance measurement information for remote use or recording.

A variety of other types of software applications may be enhanced by inclusion of range finding capabilities, with or without the camera 50. For example, the processing circuit(s) 12 may be configured to maintain dynamically updated distance measurement information, and to control a function of the wireless communication device 10 responsive to the dynamically updated distance measurement information. The function(s) may include an elapsed timer function where a timer is started/stopped responsive to changes in measured distance, an audible alarm function where changes in measured distance trigger an alarm, a communication function where changes in measured distance trigger an outgoing communication transmission (to a desired number, for example), and a display update function where changes in measured distance are displayed on the display screen 44.

In other examples, gaming applications may be enhanced through range finding. In particular, range finding may enhance the types of collaborative, online gaming supported through data networks that may be accessible from the wireless communication device 10. Non-limiting examples include team-based play where relative player locations may be important, and scavenger hunt or "orienteering" games, where directions may be given in terms of distances to/from various landmarks, etc.

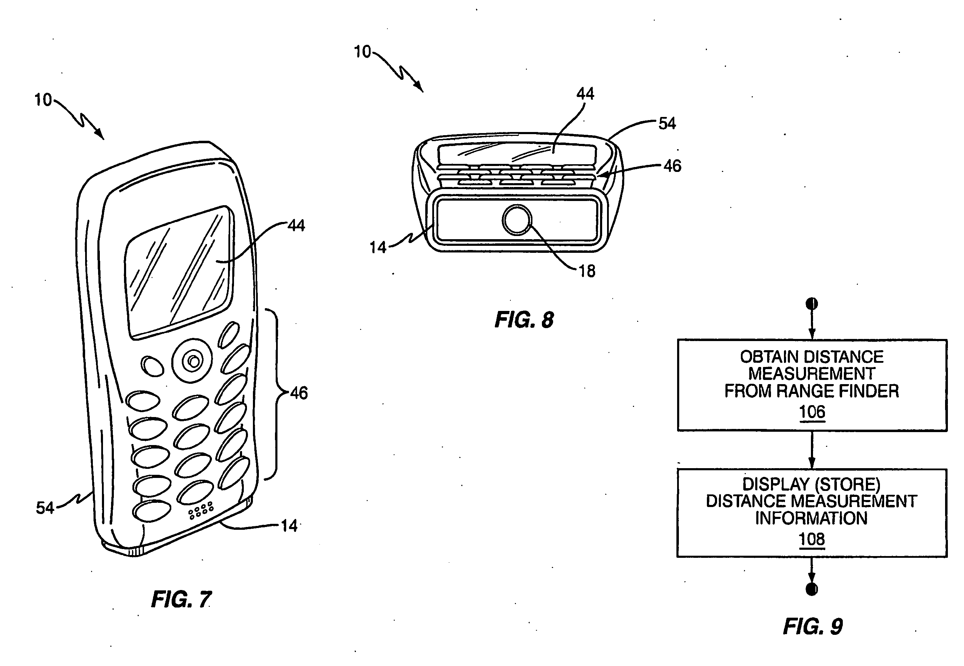

Significantly, range finding enhancements, whether for gaming, surveying, or other purposes, may be added to existing devices. For example, Fig. 7 illustrates yet another embodiment of the wireless communication device 10, wherein the range finder 14 is configured as a detachable module that removably connects to the enclosure 54. Alternatively, the range finder 14 may detachably connect to the enclosure 54 at other locations, such as at the top of the enclosure 54 relative to a display screen 60. Note that the wireless communication device 10 may be configured to re-orient the display information in a direction that complements reading distance information while pointing the range finder 14.

Thus, for the configuration shown in Fig. 8, wherein the range finder 14 points outward from the bottom of the enclosure 54, the wireless communication device 10 may be configured to invert the distance measurement information on the display 60, such that a user can point the distance sensor away from his or her body, and still read distance measurement information on the display screen 60.

Regardless of whether the range finder 14 is configured as an integral or detachable element, the processing logic of Fig. 9 depicts a top-level processing configuration for the one or more processing circuits 12. Processing begins with the processing circuit(s) 12 obtaining a distance measurement from the range finder 14 (Step 100). For example, the processing circuit(s) 12 might send a trigger or initiation signal to the range finder 14 and receive a time-of-flight measurement in return, or might receive start/stop timing signals in return. In that latter case, the processing circuit(s) 12 process the start stop timing information to calculate distance, and they also might be configured to provide unit conversion functions (ft., m, etc.), as needed or desired. Such triggering and processing may be performed on an ongoing basis.

Processing continues with the processing circuit(s) 12 causing distance measurement information to be displayed by the wireless communication device 10, and/or stored within a memory of the wireless communication device 10 (Step 102). The supporting software included in the wireless communication device 10 may be simple or complex. For example, the wireless communication device 10 may be configured simply to display individual distance measurements, or may be configured to display related sets of distance measurements. As one example of the latter case, the wireless communication device 10 may be configured to display a collection of related distance measurements defining a groom, or defining the relative location of a particular group of objects.

As such, those skilled in the art will appreciate that the rich user interface functions commonly found in wireless communication devices, such as cellular handsets, enable relatively sophisticated distance measurement functionality. For example, a "handyman's" application may comprise software that programs the wireless communication device 10 to act as a robust digital tape measure, storing and recalling related sets of distance measurements for particular rooms, etc. Further enhancements can exploit the graphical capabilities of the wireless communication device's display screen 44, such as by graphing perimeters or boundaries corresponding to collected distance measurements.

Of course, those skilled in the art will recognize additional features and advantages, and the present invention is not limited by the foregoing discussion, nor by the accompany figures. Indeed, the present invention is limited only by the following claims, and their legal equivalents.

## Claims

1. A wireless communication device (10) comprising:
a cellular communication circuit (32) for communicating with a cellular network (36):
a camera (50) for capturing digital image data;,
a range finder (14) aligned with the camera (50) for obtaining distance measurement information related to digital image data captured by the camera (50); and
a user interface (40, 42, 44, 46, 48, 50); **characterised by**
one or more processing circuits (12) configured to transmit related digital image data and distance measurement information to the cellular network (36) via the cellular communication circuit (32) and to output the distance measurement information via the user interface (40, 42, 44, 46, 48, 50).

2. The wireless communication device (10) of claim 1, wherein the user interface (40, 42, 44, 46, 48, 50) includes a display screen (44), and wherein the one or more processing circuits (12) are configured to cause the distance measurement information related to objects imaged by the camera (50) to be output on the display screen (44).

3. The wireless communication device (10) of claim 2, wherein the one or more processing circuits (12) are configured to cause a camera image for capture as the digital image data to be output on the display screen (44), and to cause distance information associated with the camera image to be output as overlay video data on the display screen (44).

4. The wireless communication device (10) of claim 1, wherein the user interface (40, 42, 44, 46, 48, 50) includes an audio output device (42), and wherein the one or more processing circuits (12) are configured additionally to cause the distance measurement information to be output via the audio output device (42).

5. The wireless communication device (10) of claim 1, wherein the one or more processing circuits (12) are configured additionally to output the distance measurement information as vibratory pulses from the wireless communication device (10) that are modulated as a function of measured distances.

6. The wireless communication device (10) of claim 1, wherein the one or more processing circuits (12) are configured to maintain dynamically updated distance information related to changing object distances within the camera's field of view.

7. The wireless communication device (10) of claim 6, wherein the one or more processing circuits (12) are configured to display the dynamically updated distance information in conjunction with a live camera image from the camera (50) on a display screen (44) of the wireless communication device (10).

8. The wireless communication device (10) of claim 7, wherein the one or more processing circuits (12) are configured to maintain dynamically updated distance measurement information as the live camera image changes, and to control a function of the wireless communication device (10) responsive to the dynamically updated distance measurement information.

9. The wireless communication device (10) of claim 8, wherein the function is at least one of an elapsed timer function, an audible alarm function, a communication function, and a display update function, wherein distance measurement information displayed on a display screen (44) of the wireless communication device (10) is updated.

## Patentansprüche

1. Drahtloses Kommunikationsgerät (10), mit:
einer zellularen Kommunikationsschaltung (32) zum Kommunizieren mit einem zellularen Netzwerk (36);
einer Kamera (50) zum Erfassen von Digitalbilddaten;
einem Bereichsfinder (14), der mit der Kamera (50) ausgerichtet ist, zum Erhalten von Entfernungsmessinformation bezüglich zu Digitalbilddaten, die von der Kamera (50) erfasst werden; und
einer Benutzerschnittstelle (40, 42, 44, 46, 48, 50);
**gekennzeichnet durch**
eine oder mehrere Verarbeitungsschaltungen (12), die konfiguriert sind, verwandte Digitalbilddaten und Entfernungsmessinformation an das zellulare Netzwerk (36) über die zellulare Kommunikationsschaltung zu übertragen und die Entfernungsmessinformation über die Benutzerschnittstelle (40, 42, 44, 46; 48, 50) auszugeben.

2. Drahtloses Kommunikationsgerät (10) nach Anspruch 1, wobei die Benutzerschnittstelle (40, 42, 44, 46, 48, 50) einen Anzeigeschirm (44) einschließt, und wobei die eine oder mehreren Verarbeitungsschaltungen (12) konfiguriert sind, zu veranlassen, dass die Entfernungsmessinformation bezüglich von Objekten, die von der Kamera (50) abgebildet werden, auf den Anzeigeschirm (44) ausgegeben wird.

3. Drahtloses Kommunikationsgerät (10) nach Anspruch 2, wobei die eine oder mehreren Verarbeitungsschaltungen konfiguriert sind, zu veranlassen, dass eine Kamerabild zur Erfassung als die Digitalbilddaten auf dem Anzeigeschirm (44) ausgegeben wird, und zu veranlassen, dass Entfernungsinformation, die mit dem Kamerabild verknüpft ist, als Überlagerungs-Videodaten auf dem Anzeigeschirm (44) ausgegeben werden.

4. Drahtloses Kommunikationsgerät (10) nach Anspruch 1, wobei die Benutzerschnittstelle (40, 42, 44, 46, 48, 50) ein Audio-Ausgabegerät (42) einschließt, und wobei die eine oder mehreren Verarbeitungsschaltungen konfiguriert sind, zusätzlich zu veranlassen, dass die Entfernungsmessinformation über das Audio-Ausgabegerät (42) ausgegeben wird.

5. Drahtloses Kommunikationsgerät (10) nach Anspruch 1, wobei die eine oder mehreren Verarbeitungsschaltungen (12) konfiguriert sind, zusätzlich die Entfernungsmessinformation als Vibrationspulse von dem drahtlosen Kommunikationsgerät (10) auszugeben, die als eine Funktion von gemessenen Entfernungen moduliert werden.

6. Drahtloses Kommunikationsgerät (10) nach Anspruch 1, wobei die eine oder mehreren Verarbeitungsschaltungen (12) konfiguriert sind, dynamisch aktualisierte Entfernungsinformation bezüglich sich ändernden Objektentfernungen innerhalb des Kamerasichtfeldes aufrecht zu erhalten.

7. Drahtloses Kommunikationsgerät (10) nach Anspruch 6, wobei die eine oder mehreren Verarbeitungsschaltungen (12) konfiguriert sind, dynamisch aktualisierte Entfernungsinformation in Verbindung mit einem Live-Kamerabild von der Kamera (50) auf einem Anzeigeschirm (44) des drahtlosen Kommunikationsgerätes anzuzeigen.

8. Drahtloses Kommunikationsgerät (10) nach Anspruch 7, wobei die eine oder mehreren Verarbeitungsschaltungen konfiguriert sind, dynamisch aktualisiere Entfernungsmessinformation aufrecht zu erhalten, wenn sich das Live-Kamerabild ändert und eine Funktion des drahtlosen Kommunikationsgerätes reagierend auf die dynamisch aktualisiere Entfernungsmessinformation zu steuern.

9. Drahtloses Kommunikationsgerät (10) nach Anspruch 8, wobei die Funktion zumindest eines einer verstrichenen Zeitgeberfunktion, einer hörbaren Alarmfunktion, einer Kommunikationsfunktion und einer Anzeigeaktualisierungsfunktion ist, wobei eine Entfernungsmessinformation aktualisiert wird, die auf einem Anzeigeschirm (44) des drahtlosen Kommunikationsgerätes (10) angezeigt wird.

## Revendications

1. Dispositif de communication sans fil (10) comprenant :
un circuit de communication cellulaire (32) pour communiquer avec un réseau cellulaire (36);
une caméra (50) qui sert à capter des données d'images numériques;
un télémètre (14) aligné avec la caméra (50) pour obtenir des informations concernant la mesure de distance se rapportant aux données d'images numériques captées par la caméra (50); et
une interface utilisateur (40, 42, 44, 46, 48, 50);
**caractérisé par**
un ou plusieurs circuits de traitement (12) configuré(s) pour transmettre les données d'images numériques annexes et les informations concernant la mesure de distance au réseau cellulaire (36) par l'intermédiaire du circuit de communication cellulaire (32) et pour délivrer en sortie les informations concernant la mesure de distance par l'intermédiaire de l'interface utilisateur (40, 42, 44, 46, 48, 50).

2. Dispositif de communication sans fil (10) de la revendication 1, dans lequel l'interface utilisateur (40, 42, 44, 46, 48, 50) inclut un écran (44), et dans lequel le ou les circuit(s) de traitement (12) sont configurés pour amener les informations concernant la mesure de distance se rapportant à des objets que la caméra (50) prend en image à être délivrés en sortie sur l'écran (44).

3. Dispositif de communication sans fil (10) de la revendication 2, dans lequel le ou les circuit(s) de traitement (12) sont configurés pour amener une image à capturer par la caméra comme données d'images numériques à être délivrée en sortie sur l'écran (44), et pour amener des informations concernant la distance associées à l'image captée par la caméra à être délivrées en sortie comme données vidéo superposées sur l'écran (44).

4. Dispositif de communication sans fil (10) de la revendication 1, dans lequel l'interface utilisateur (40, 42, 44, 46, 48, 50) comprend un dispositif de sortie audio (42), et où le ou les circuit(s) de traitement (12) sont configurés en plus pour amener les informations concernant la mesure de distance à être délivrées en sortie par l'intermédiaire du dispositif de sortie audio (42).

5. Dispositif de communication sans fil (10) de la revendication 1, dans lequel le ou les circuit(s) de traitement (12) sont configurés en plus pour délivrer en sortie les informations concernant la mesure de distance en tant qu'impulsions vibratoires depuis le dispositif de communication sans fil (10) qui sont modulées en tant que fonction des distances mesurées.

6. Dispositif de communication sans fil (10) de la revendication 1, dans lequel le ou les circuit(s) de traitement (12) sont configurés pour maintenir la mise à jour dynamique des informations concernant la distance se rapportant à des distances d'objet changeantes dans le champ de vision de la caméra.

7. Dispositif de communication sans fil (10) de la revendication 6, dans lequel le ou les circuit(s) de traitement (12) sont configurés pour afficher les informations concernant la distance mises à jour dynamiquement conjointement avec une image en direct captée par la caméra depuis la caméra (50) sur l'écran (44) du dispositif de communication sans fil (10).

8. Dispositif de communication sans fil (10) de la revendication 7, dans lequel le ou les circuit(s) de traitement (12) sont configurés pour maintenir la mise à jour dynamique des informations concernant la mesure de distance à mesure que l'image en direct captée par la caméra change, et pour commander une fonction du dispositif de communication sans fil (10) en réponse aux informations concernant la mesure de distance mises à jour dynamiquement.

9. Dispositif de communication sans fil (10) de la revendication 8, dans lequel la fonction est au moins l'une d'une fonction de comptage du temps écoulé, d'une fonction d'alarme audible, d'une fonction de communication, et d'une fonction de mise à jour de l'affichage, où les informations concernant la mesure de distance affichées sur l'écran (44) du dispositif de communication sans fil (10) sont mises à jour.
